# EUROPEAN PATENT SPECIFICATION

(11) **EP 2 242 406 B1**
(45) Date of publication and mention of the grant of the patent: **07.09.2011**
(21) Application number: 09713154.4
(22) Date of filing: 18.02.2009
(51) Int. Cl.: A47J 31/36

(54) **MACHINE FOR DISPENSING INFUSIONS FROM A POD PREPARATION HAVING A RESETTING DEVICE**
MASCHINE ZUR AUSGABE VON INFUSIONEN AUS EINEM BEHÄLTERPRÄPARAT MIT RÜCKSETZVORRICHTUNG
MACHINE DESTINÉE À DISTRIBUER DES INFUSIONS À PARTIR D'UNE PRÉPARATION EN DOSETTE, AVEC DISPOSITIF DE RÉENCLENCHEMENT

(30) Priority: 18.02.2008 IT RM20080092
(43) Date of publication of application: 27.10.2010
(73) Proprietor: Ides Development Company Limited, Hong Kong (CN)
(72) Inventor: STEFANONI, Roberto, 23048 Oggiono LC (IT)
(74) Representative: Papa, Elisabetta
(86) International application number: PCT/IB2009/000284
(87) International publication number: WO 2009/104071

(56) References cited:
- EP-A- 1 219 217
- WO-A-00/38558
- WO-A-2004/049878
- FR-A- 2 836 625
- US-A1- 2002 148 356

## Description

The present invention refers to a machine for dispensing infusions, such as coffee, tea, etc. from a cartridge/pod preparation.

In particular, it refers to an infusion machine of the type comprising an automatic cartridge ejection system.

Several types of machines are known on the market for preparing infusions such as coffee, tea and the like from a generally granular preparation contained in cartridges, pods and the like.

Such machines typically comprise a boiler where a fluid, generally water, is heated and brought to pressure, and a pod holder that can be fitted to the boiler for extracting the infusion.

In particular, infusion machines provide a user's placing a new pod in the pod holder and connecting the latter to the boiler. Then, boiler-dispensed fluid under pressure passes through the pod and the infusion made (brewed) is extracted from the bottom of the pod holder. At the end of the infusion extracting step, the used pod has to be removed, so as to allow a new use of the machine.

The machines for preparing infusions from a product contained in a cartridge as those described above typically provide that a user, in order to process an infusion from a single-dose cartridge/pod and prearrange the machine for a subsequent use, has to carry out the following steps:
1. inserting the cartridge in the cartridge holder;
2. bringing back the cartridge holder under the boiler;
3. dispensing the infusion;
4. ejecting the cartridge;
5. "resetting" the cartridge holder, i.e. bringing it back into a configuration in which it is ready to receive a new cartridge; and
6. extracting the cartridge holder from under the boiler.

Generally the above-mentioned steps are elaborate and require the use of complex devices.

In some machines, providing a stationary pod holder under the boiler, steps 2 and 6 are unnecessary; however, the user anyhow has to carry out the remaining four steps, requiring execution times that depend on the machine type, and anyhow are relatively lengthy.

US 2002/0148356 discloses a beverage filter cartridge holder to brew a beverage by infusing heated liquid within the cartridge. Rotation of the cartridge within the holder is prevented by locating surfaces arranged to inter-engage with one or more surface irregularities in the cartridge sidewall. Ejection arms are provided in the holder as well as a system of legs and pawls causing the cartridge housing to rotate to a cartridge ejection position.

The technical problem underlying the present invention is to provide a machine for dispensing infusions allowing to overcome the drawbacks mentioned above with reference to the known art.

Such a problem is solved by a machine for dispensing infusions according to claim 1.

Preferred features of the present invention are set forth in the dependent claims thereof.

The present invention provides several relevant advantages. The main advantage of the present invention is to provide a machine for dispensing infusions that allows to eject the cartridge and "reset" the cartridge holder substantially in a single step, continuous, quick and carried out automatically. Therefore, the present invention allows to reduce the number of steps to be carried out and the times required between an infusion dispensing and the subsequent one.

A further advantage of the present invention is to provide an extremely simple and safe machine, allowing to insert the cartridge, dispense the infusion and eject the cartridge without ever coming into contact with the cartridge holder.

It will be understood that in the present document by the term "cartridge" there will be meant without distinction cartridges, pods and the like.

Advantages, features and the operation steps of the present invention will be made apparent in the following detailed description of an embodiment thereof, given by way of example and not for limitative purposes. Reference will be made to the figures of the annexed drawings, wherein:
- Figure 1 shows a top perspective view in partial section of the infusion machine according to a preferred embodiment of the present invention;
- Figures 2A, 2B and 2C each show a side view of the machine of Figure 1 in a first embodiment in which said machine is mounted at 45° with respect to the ground, respectively in a first step of loading the cartridge, in a second step of dispensing the infusion and in a third step of ejecting the cartridge;
- Figures 3 and 3A each show a cross-sectional view of the machine of Figure 1 in a first cartridge loading step, in said first embodiment in which the infusion machine is mounted at 45° with respect to the ground (S) and in a second embodiment in which the infusion machine is mounted parallelly to the ground (S), respectively;
- Figures 4, 5, and 6 each show a cross-sectional view of the infusion machine of Figure 2, in the second infusion dispensing step, the third cartridge ejecting step and a fourth "resetting" step, respectively;
- Figure 7 shows a cross-sectional view of the infusion machine of Figure 2 "reset" and ready to receive a new cartridge.

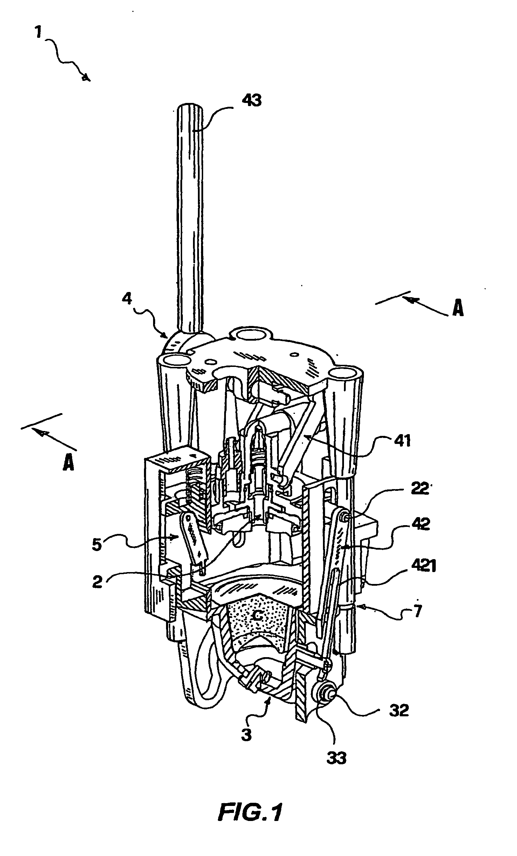

Referring to Figure 1, a machine for dispensing infusions such as coffee, tea and the like from a preparation in a cartridge C is generally denoted by1.

The machine 1 for dispensing infusions mainly comprises: an infusion head unit 2 for heating and dispensing a fluid that transits through the cartridge C for dispensing the infusion; a housing 3 for the cartridge C; means 4 for actuating the infusion head unit 2 and/or the housing 3; and means 5 for blocking and/or supporting the housing 3. As it is shown always in Figure 1, the infusion head unit 2, the housing 3 and the actuating means 4 are associated to a frame 7.

Structure and function of the hereto-introduced components will presently be detailed.

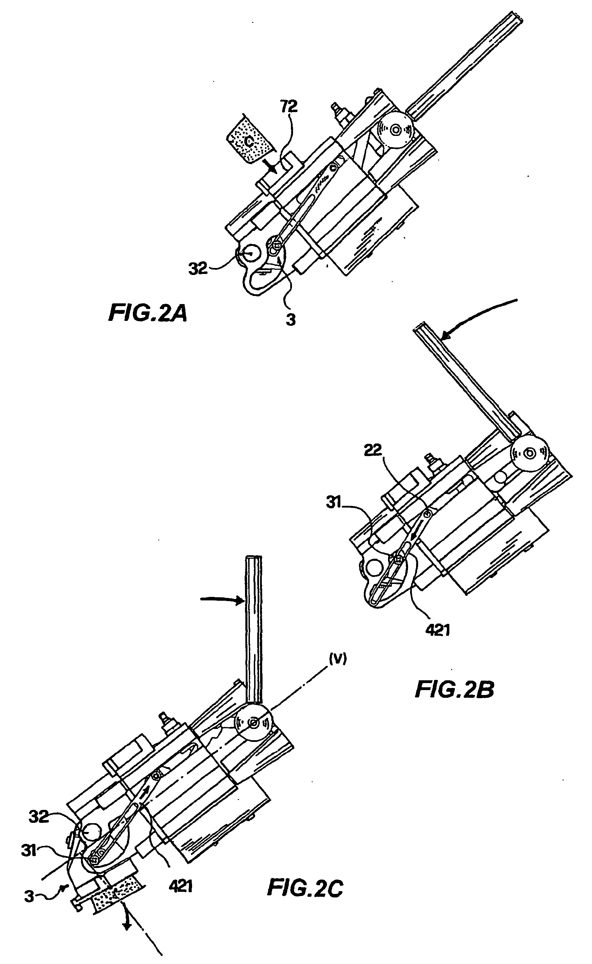

As it is shown, e.g., in the sequence of Figures 2A, 2B and 2C, the housing 3 can assume a first "set" configuration of loading the cartridge C and extracting the infusion (Figures 2A, 2B) and a second "unset" configuration of ejecting the cartridge C (Figure 2C). As it will be detailed hereinafter, in the first "set" configuration of loading the cartridge C and extracting the infusion, the means 5 for blocking and/or supporting the housing 3 support at least one free transverse end of the housing 3.

In particular, in the present embodiment the housing 3 is rotatably connected, at a bottom portion thereof, to the frame 7 through rotatable connection means, e.g. a pin 32. Said rotatable connection means 32 can provide a contrast element 33, associated e.g. to the pin 32 or the seat thereof, its function being that of fostering the rotation of the housing 3 in the change from said first "set" configuration of loading the cartridge C and extracting the infusion to said second "unset" configuration of ejecting the cartridge C. The contrast element 33 may be, for instance, a torsion spring. According to a preferred embodiment, rotation of the housing 3 occurs about an axis defined by the above-mentioned pin and lying on a substantially horizontal plane.

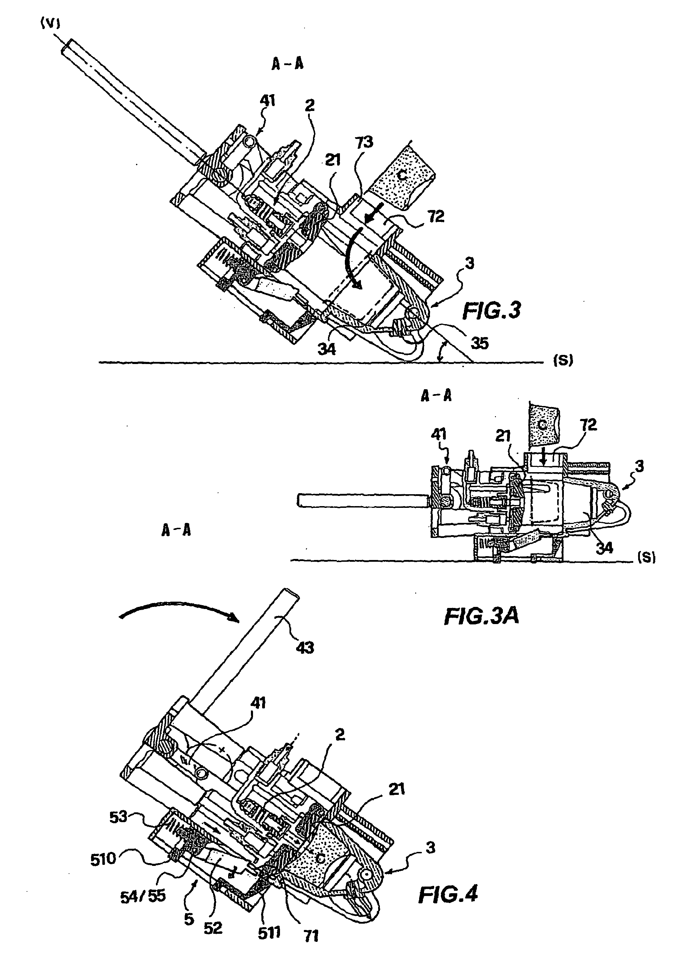

As shown in Figure 3, the housing 3 provides a seat 34, shaped so as to receive the cartridge C and limited bottomwise by a filter apt to allow transit of the infusion to an outlet port 35 of the infusion itself.

As shown in Figure 3, the infusion head unit 2 comprises a cartridge-pressure element 21 that, as it will be detailed hereinafter, has the function of exerting a predetermined pressure on the cartridge during the infusion dispensing step.

It will be understood that according to alternative embodiments the infusion machine 1 could provide infusion head units 2 different from the one described hereto.

As shown in Figure 3, the infusion head unit 2 and said housing 3 are arranged longitudinally aligned along an axis V.

According to the present embodiment, the infusion head unit 2 is slidably mounted on the frame 7 so as to assume a first position adjoining the housing 3 in which it is lowered (Figure 4) and a second spaced-apart position from the housing 3 in which it is lifted (Figure 3). As shown, e.g., from the sequence of Figures 3 and 4, the infusion head unit 2 slides internally to the frame 7 along said longitudinal axis V. Evidently, according to alternative embodiments, the infusion head unit 2 may be stationary, therefore integral to the frame 7, whereas the housing 3 may be slidably mounted in said frame 7 so as to assume a first position adjoining the infusion head unit 2, in which the housing 3 is lifted, and a second spaced-apart position from the infusion head unit 2, in which the housing 3 is lowered.

According to the present embodiment, the means 5 for blocking and/or supporting the housing 3 is connected to the frame 7 and, as mentioned hereto, apt to support at least one free transverse end of the housing 3 when the latter lies in said first "set" configuration of loading the cartridge C and extracting the infusion. In particular, the means 5 for blocking and/or supporting the housing 3 is snap-locking means apt to disengage from said free end when, as it will be evident hereinafter, said infusion head unit 2 changes from said first position adjoining the housing 3, in which it is lowered, to said second spaced-apart position from the housing 3, in which it is lifted.

As shown, e.g., in Figure 4, in a preferred embodiment the means 5 for blocking and/or supporting the housing 3 comprises:
- a main bolt 51, having a top portion 510 and a bottom portion 511 integral therebetween;
- a secondary bolt 52, rotatably connected to the top portion 510 of the main bolt 51; and
- elastic contrast means 53.

The rotatable connection between the main bolt 51 and the secondary bolt 52 is made through suitable rotatable connection means 54, comprising a contrast element 55, which "push" the free portion of the secondary bolt toward an opening 71 of the frame 7 facing the housing 3.

As shown in Figures 1 and 3, the means 4 for actuating said infusion head unit 2 and/or said housing 3 comprises:
- first means 41 for moving said infusion head unit 2; and
- second means 42 for moving said housing 3.

In particular, the first moving means 41 is moving and contrast means 41 fixed to said infusion head unit 2 and such as to block the latter in its first adjoined position (Figure 4).

In a preferred embodiment the first moving means 41 comprises a so-called "toggle-type" moving system based on a pair of hinged levers, as shown in Figure 3. When the infusion head unit 2 is in the second spaced-apart position from the housing 3, in which it is lifted, the toggle-type moving system is retracted (i.e., said levers form a generally acute angle, as shown in Figure 3), whereas when the infusion head unit 2 is in the first position adjoining the housing 3, in which it is lowered, the toggle-type moving system 41 is extended (i.e., said levers are substantially aligned, as shown in Figure 4). In this latter position the toggle-type moving system 41 makes a safety blocking of the infusion head unit 2, by overstepping its own end of stroke in a reverse-angle configuration.

The second moving means 42 is connected to the housing 3 and fixed to the infusion head unit 2, as shown in Figure 1.

In a preferred embodiment, such second moving means 42 comprises at least one connecting rod 421 connected, at a first end thereof, to said infusion head unit 2 and, at a second end thereof, to said housing 3.

As it will be evident from the description of operation of the infusion machine 1, the connecting rod 421 follows the infusion head unit 2 in its change from the position adjoining the housing 3 to the spaced-apart position from the housing 3, thereby allowing the changing of the housing 3 from said "unset" configuration to said "set" configuration.

As shown in Figure 2B, the connecting rod 421 is connected to the infusion head unit 2 by respective rotatable connection means 22. The connection between the connecting rod 421 and the housing 3 is made through a slot obtained in the connecting rod 421 for engagement with a respective pin, or shoe, 31 fixed to the housing 3.

In the present embodiment, the actuating means 4 comprises a control lever 43 for controlling said first moving means 41 of said infusion head unit 2 and said second moving means 42 of said housing 3.

As shown in detail in Figures 2A and 3, the frame 7 provides a "mouth" 72 for inserting the cartridge C at or directly into the cartridge holder 3.

In particular, according to the present embodiment, the cartridge C, once inserted into the "mouth" 72, is slidably coupled to insertion guides 73, apt to direct the cartridge to the cartridge holder 3.

Operation of the infusion machine 1 described hereto will be made apparent from the following description of the related process of use.

In particular, operation will presently be described with reference to an infusion machine 1 mounted tilted of 45° with respect to the ground (S in Figure 3).

### Step 1: Inserting the cartridge into the cartridge holder

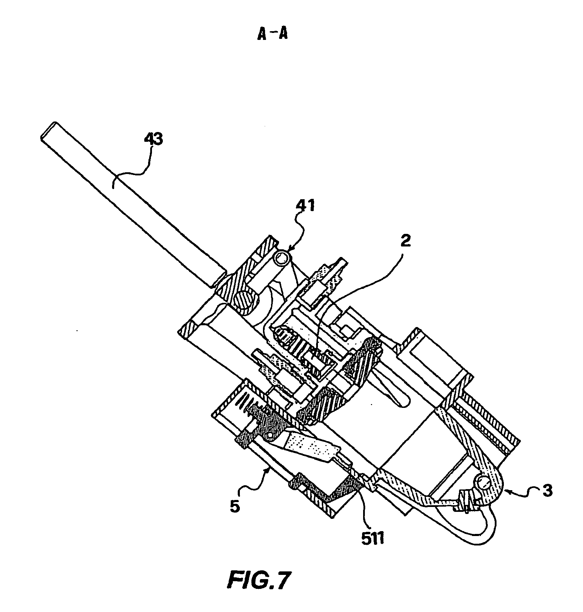

Referring initially to Figure 7, the infusion machine 1 lies in a first configuration ready for use by a user, in which:
- the lever 43 is lifted;
- the first moving means 41 of said infusion head unit 2 is retracted;
- the infusion head unit 2 is in said second spaced-apart position from the housing 3;
- the housing 3 is in said first "set" configuration of loading the cartridge C; and
- the means 5 for blocking and/or supporting, through the bottom portion 511 thereof, support and block the housing 3 in said first "set" configuration.

Referring to Figures 2A and 3, a cartridge C is inserted into the housing 3 through the "mouth" 72 of the frame 7 and the insertion guides 73.

It will be appreciated that, according to the present embodiment in which the infusion machine 1 is mounted tilted with respect to the ground (S), the cartridge C positions itself in the housing 3 by effect of gravity.

In a configuration different from the preceding one in which the infusion machine 1 is mounted horizontal with respect to the ground, as shown in Figure 3A, the cartridge C, inserted through the "mouth" 72, remains inside the frame 7, resting on the secondary bolt 52 and being held in position (at the seat 34 of the housing 3) by the insertion guides 73. In this case, as it will be made apparent hereinafter, the cartridge C is inserted into the related seat 34 only when the infusion head unit 2 is brought in the first position adjoining the housing 3.

### Step 2: Dispensing the infusion

Turning to the present example, once the cartridge C is inserted into the housing 3, the moving means 41 of said infusion head unit 2, in this case the toggle-type moving system, actuates by lowering the lever 43

As shown in Figure 4, when the lever 43 has reached its lowered position, the infusion machine 1 lies in a configuration apt to dispense the infusion, wherein:
- the infusion head unit 2 is in said first position adjoining said housing 3;
- the toggle-type moving system 41 is extended and makes a safety blocking of the infusion head unit 2, by overstepping its own end of stroke in a reverse-angle configuration; and
- the housing 3 is still in the preceding "set" configuration of loading the cartridge C and extracting the infusion.

As shown in the sequence of Figures 2A and 2B, the second moving means 42 of the housing 3, being fixed to the infusion head unit 2, are lowered with respect to the preceding configuration. In changing from Step 1 to Step 2, the second moving means 42 does not interfere with the housing 3 as the pin 31 connected to the housing 3 moves along the slot (Figure 2A) obtained in the connecting rod 421, coming from a position abutting the bottom of the slot to a position substantially opposite to the latter (Figure 2B).

Lastly, as is evident from the sequence of Figures 3 and 4, in this step the secondary bolt 52 rests against the infusion head unit 2 by means of the contrast element 55.

In this step, infusion dispensing occurs through the cartridge-pressure element 21 that presses, via a gasket thereof, on the cartridge holder 3 and the cartridge C.

### Step 3: Ejecting and "resetting"

Upon ending infusion dispensing, the lever 43 can be lifted again.

In this step, ejecting of cartridge C and "resetting" of housing 3 occur.

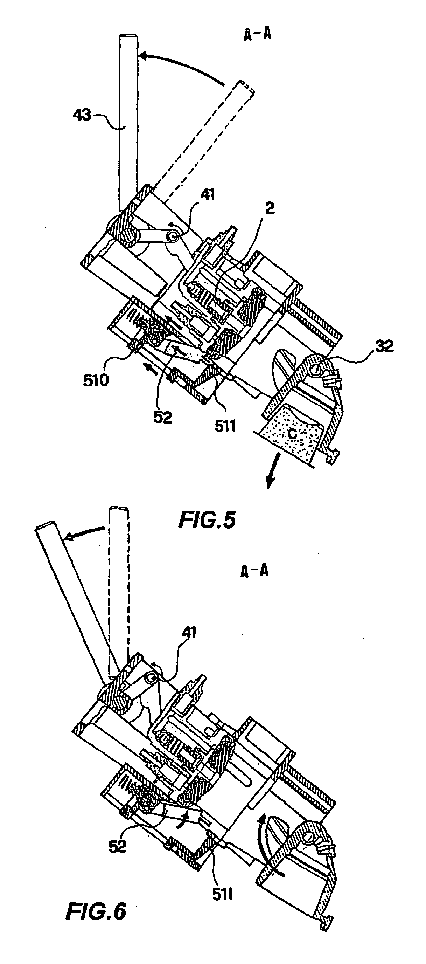

In particular, as shown in Figure 5, the toggle-type moving system 41, actuated by the lever 43, lifts the infusion head unit 2 which in turn interferes with the secondary bolt 52, lifting it. As mentioned in the foregoing, the bolt 52 is connected to the top portion 510 of the main bolt that, through its bottom portion 511, blocks and supports the housing 3 in said "set" configuration of loading the cartridge C and extracting the infusion. Then, the secondary bolt 52 lifts the main bolt 51 which, therefore, "frees" the housing 3, allowing it to rotate about the axis of rotation defined by the rotatable connection means 32.

In the present embodiment, the rotation bringing the housing 3 in said second "unset" configuration of ejecting the cartridge C is effected by the combined action of the force of gravity and the contrast element 33. As a result of said rotation, ejecting of cartridge C is attained substantially by effect of the action of the gravitational force, with possible contribution of the centrifugal force.

As shown in Figures 2C, 5 and 6, ejecting of cartridge C occurs when the lever 43 is partially lifted and the infusion head unit 2 has not ended its stroke in order to come into said second spaced-apart position from said housing 3.

In particular, as shown in Figure 2C, during the change from the first "set" configuration to the second "unset" configuration, the pin 31 connected to the housing 3 abuts the bottom of the slot obtained in the connecting rod 421.

Further stroke of the lever 43 and infusion head unit 2 causes:
- breaking of the interference between the secondary bolt 52 and the infusion head unit 2 (Figure 6); and
- "resetting" of the housing 3 (Figure 7).

In particular, as shown in Figures 5 and 6, the secondary bolt 52 during its upstroke meets a striker plane (defined by opening 71) that rotates it so as to break the interference with the infusion head unit 2. This occurs not before the "freeing" of the housing by the main bolt 51. In particular, the striker plane is defined by the top portion of the frame portion defining the opening 71.

Upon breaking the interference, the blocking and/or supporting means 5 are brought back, by the elastic contrast means 53, into the initial configuration in which it is apt to block and support the housing 3 (Figure 6).

Concomitantly, as shown in Figures 2C and 6, the further stroke of the infusion head unit 2 "lifts" the connecting rod 421, and therewith the housing 3, through the pin 21 integral thereto that lies in abutment on the bottom of the slot obtained in the connecting rod itself. As shown in the sequence of Figures 6 and 7, at the end of the further stroke of the lever 43 and the infusion head unit 2, the housing 3 lies again in the first "set" configuration of loading the cartridge C and extracting the infusion.

From the description of operation of the infusion machine 1 it will be evident that:
- the arrangement of the housing 3 is such as to allow said housing 3 to change passively, by effect of the sole gravity, from said first "set" configuration of loading the cartridge C and extracting the infusion to said second "unset" configuration of ejecting the cartridge C;
- said infusion head unit 2 and said housing 3 are generally mutually movable so as to assume said first close position, in which they are in contact, and said spaced-apart position, in which they are spaced apart;
- the machine 1 for dispensing infusions can be mounted tilted, of a predetermined angle with respect to the ground (S), and according to two preferred embodiments said angle is of 0° or of about 45°;
- the housing 3, in said second "unset" configuration of ejecting the cartridge C, is rotated, about an axis lying on a substantially horizontal plane, of a predetermined angle α with respect to said first "set" configuration of loading the cartridge C and extracting the infusion; said angle α is dependent upon the tilt of the infusion machine 1 with respect to the ground (S) and/or a related end-of-stroke abutment. In particular, the angle α is preferably equal to about 45° or it may range between 40° and 180°; between 45° and 90°.

It will be appreciated that the present invention may be used with cartridges of different type, like, e.g.: non self-sealing PP cartridges, thermoformed material cartridges, self-sealing cartridges, etc.

The present invention has been hereto described with reference to a preferred embodiment thereof. It is understood that other embodiments might exist, all falling within the concept of the same invention, and all comprised within the protective scope of the claims hereinafter.

## Claims

1. A machine (1) for dispensing infusions, such as coffee, tea and the like from a pod/cartridge (C) preparation and the like, comprising:
- an infusion head unit (2), suitable for heating and dispensing a fluid that transits through the cartridge (C) for dispensing the infusion;
- a housing (3) apt to receive the cartridge (C), such as to assume a first "set" configuration of loading the cartridge (C) and extracting the infusion and a second "unset" configuration of ejecting the cartridge (C); and
- means (4) for the combined moving of said infusion head unit (2) and of said housing (3), apt to cause the change of the latter from said "set" configuration to said "unset" configuration and vice-versa, depending on the motion of said infusion head unit (2), whereby
said moving means (4) in its turn comprises:
- first moving means (41) of said infusion head unit (2); and
- second moving means (42) of said housing (3),
**characterised in that** said second moving means (42) comprises at least one connecting rod (421) connected, at a first end thereof, to said infusion head unit (2) and, at a second end thereof, to said housing (3).

2. The machine (1) for dispensing infusions according to claim 1, wherein said infusion head unit (2) and said housing (3) are mutually movable so as to assume a first adjoining position, in which they are in contact, and a second, spaced apart position, in which they are at a distance.

3. The machine (1) for dispensing infusions according to claim 1 or 2, wherein said infusion head unit (2) is movable along a longitudinal axis (V) so as to make a first position adjoining said housing (3) and a second position spaced apart from said housing (3).

4. The machine (1) for dispensing infusions according to any one of the preceding claims, wherein said infusion head unit (2) and said housing (3) are arranged longitudinally aligned.

5. The machine (1) for dispensing infusions according to any one of the preceding claims, wherein said housing (3) is rotatably connected to a frame (7) of the machine in order to assume said "set" and "unset" configurations.

6. The machine (1) for dispensing infusions according to the preceding claim, comprising a contrast element (33), associated with said rotatable connection (32) of the housing (3) to the frame (7) and apt to foster the motion of said housing (3) in the change from said first "set" configuration to said second "unset" configuration.

7. The machine (1) for dispensing infusions according to any one of the preceding claims, wherein said housing (3), in said second "unset" configuration, is rotated of a predetermined angle (α) with respect to said first "set" configuration of loading the cartridge (C) and extracting the infusion.

8. The machine (1) for dispensing infusions according to the preceding claim, wherein said predetermined angle (α) is dependent upon the tilt of the machine (1) with respect to the ground (S) and/or upon a related end-of-stroke abutment.

9. The machine (1) for dispensing infusions according to claim 7 or 8, wherein said predetermined angle (α) ranges between about 40° and 180°.

10. The machine (1) for dispensing infusions according to the preceding claim, wherein said predetermined angle (α) ranges between about 45° and 90°.

11. The machine (1) for dispensing infusions according to the preceding claim, wherein said predetermined angle (α) is about 45°.

12. The machine (1) for dispensing infusions according to any one of the preceding claims, wherein the overall arrangement is such as to allow said housing (3) to change passively, by effect of gravity, from said first "set" configuration to said second "unset" configuration.

13. The machine (1) for dispensing infusions according to any of the preceding claims, wherein said first moving means is moving and contrast means (41) connected to said infusion head unit (2) and such as to block by opposition said infusion head unit (2) in a first position adjoining said housing (3).

14. The machine (1) for dispensing infusions according to any of the preceding claims, wherein said first moving means (41) is a toggle-type moving system based on a pair of hinged levers.

15. The machine (1) for dispensing infusions according to the preceding claim, wherein said toggle-type moving system (41) makes a safety blocking, by overstepping its own end of stroke in a reverse-angle configuration when said infusion head unit (2) is in said first position adjoining said housing (2).

16. The machine (1) for dispensing infusions according to any one of the preceding claims, wherein said second moving means (42) is connected to said housing (3) and fixed to said infusion head unit (2).

17. The machine (1) for dispensing infusions according to any of the preceding claims, wherein said connecting rod (421) has a slot for sliding engagement with a respective element (31) for connecting with said housing (3).

18. The machine (1) for dispensing infusions according to any one of the preceding claims, further comprising locking and/or supporting means (5) for selectively supporting and blocking said housing (3) in said first "set" configuration of loading the cartridge (C) and extracting the infusion.

19. The machine (1) for dispensing infusions according to the preceding claim, wherein said means (5) for blocking and/or supporting the housing (3) is selectively actuable and/or movable by said infusion head unit (2).

20. The machine (1) for dispensing infusions according to claim 18 or 19, wherein said means (5) for blocking and/or supporting the housing (3) comprises:
- a main bolt (51), having a first portion (510) and a second portion (511) preferably integral therebetween; and
- a secondary bolt (52), rotatably connected to the first portion (510) of the main bolt (51) and apt to lock said housing (3).

21. The machine (1) for dispensing infusions according to the preceding claim, wherein said means 85) for blocking and/or supporting the housing (3) comprises elastic contrast means (53).

22. The machine (1) for dispensing infusions according to any one of the preceding claims, comprising guide means (73) for inserting the cartridge at or into the cartridge holder (3).

23. The machine (1) for dispensing infusions according to the preceding claim, wherein the overall arrangement of said guide means (73) is dependent upon the tilt of the machine (1) with respect to the ground (S) and such as to allow inserting of the cartridge (C) at or into the cartridge holder (3) by effect of the sole gravity.

24. The machine (1) for dispensing infusions according to any one of the preceding claims, which is mountable tilted with respect to the ground (S).

25. The machine (1) for dispensing infusions according to any one of the preceding claims, which is mountable tilted of about 45° with respect to the ground (S).

26. The machine (1) for dispensing infusions according to any one of the preceding claims, which is mountable horizontally with respect to the ground (S).

27. The machine (1) for dispensing infusions according to any one of the preceding claims, wherein said infusion head unit (2) is mounted slidable with respect to a frame (7) of the machine itself.

## Patentansprüche

1. Maschine (1) zum Spenden von Aufgussgetränken wie Kaffee, Tee und dgl. aus einer Filterkapsel/Kartusche (C) und dgl., mit:
- einer Aufgusskopfeinheit (2), die geeignet ist, ein Fluid zu erhitzen und abzugeben, welches sich durch die Kartusche (C) bewegt, um das Aufgussgetränk zu spenden;
- einem Gehäuse (3), das in der Lage ist, die Kartusche (C) so zu empfangen, dass sie eine erste, "eingestellte" Konfiguration zum Laden der Kartusche (C) und zum Abgeben des Aufgussgetränks und eine zweite, "nicht eingestellte" Konfiguration zum Ausstoßen der Kartsuche (C) einnimmt; und
- einer Einrichtung (4) für das kombinierte Bewegen der Aufgusskopfeinheit (2) und des Gehäuses (3), die in der Lage ist, den Wechsel des Letzteren aus der "eingestellten" Konfiguration in die "nicht eingestellte" Konfiguration zu bewirken, und umgekehrt, in Abhängigkeit von der Bewegung der Aufgusskopfeinheit (2), wobei
die Bewegungseinrichtung (4) ihrerseits aufweist:
- eine erste Bewegungseinrichtung (41) der Aufgusskopfeinheit (2); und
- eine zweite Bewegungseinrichtung (42) des Gehäuses (3),
**dadurch gekennzeichnet, dass** die zweite Bewegungseinrichtung (42) wenigstens eine Verbindungsstange (421) umfasst, die an ihrem einen Ende mit der Aufgusskopfeinheit (2) und an ihrem anderen Ende mit dem Gehäuse (3) verbunden ist.

2. Maschine (1) zum Spenden von Aufgussgetränken nach Anspruch 1, wobei die Aufgusskopfeinheit (2) und das Gehäuse (3) gegenseitig so beweglich sind, dass sie eine erste angrenzende Position einnehmen können, in welcher sie in Kontakt sind, und eine zweite, gegenseitig beabstandete Position, in welcher sie in einer Distanz sind.

3. Maschine (1) zum Spenden von Aufgussgetränken nach Anspruch 1 oder 2, wobei die Aufgusskopfeinheit (2) entlang einer Längsachse (V) so beweglich ist, dass sie eine erste Position einnehmen kann, in welcher sie an das Gehäuse (3) angrenzt, und eine zweite Position, in welcher sie von dem Gehäuse (3) beabstandet ist.

4. Maschine (1) zum Spenden von Aufgussgetränken nach einem der vorhergehenden Ansprüche, wobei die Aufgusskopfeinheit (2) und das Gehäuse (3) längs ausgerichtet angeordnet sind.

5. Maschine (1) zum Spenden von Aufgussgetränken nach einem der vorhergehenden Ansprüche, wobei das Gehäuse (3) mit einem Rahmen (7) der Maschine drehbar verbunden ist, um die "eingestellte" und die "nicht eingestellte" Konfiguration einnehmen zu können.

6. Maschine (1) zum Spenden von Aufgussgetränken nach dem vorhergehenden Anspruch, mit einem Kontrastelement (33), welches der drehbaren Verbindung (32) des Gehäuses (3) mit dem Rahmen (7) zugeordnet und dafür ausgebildet ist, die Bewegung des Gehäuses (3) bei dem Wechsel von der ersten, "eingestellten" Konfiguration zu der zweiten, "nicht eingestellten" Konfiguration zu fördern.

7. Maschine (1) zum Spenden von Aufgussgetränken nach einem der vorhergehenden Ansprüche, wobei das Gehäuse (3) in der zweiten, "nicht eingestellten" Konfiguration um einen vorbestimmten Winkel (α) in Bezug auf die erste, "eingestellte" Konfiguration zum Laden der Kartusche (C) und des Spendens des Aufgussgetränks gedreht ist.

8. Maschine (1) zum Spenden von Aufgussgetränken nach dem vorhergehenden Anspruch, wobei der vorbestimmte Winkel (α) von der Neigung der Maschine (1) gegen den Boden (S) und/oder von einem zugeordneten Hubendeanschlag abhängig ist.

9. Maschine (1) zum Spenden von Aufgussgetränken nach Anspruch 7 oder 8, wobei der vorbestimmte Winkel (α) in einem Bereich zwischen etwa 40° und 180° liegt.

10. Maschine (1) zum Spenden von Aufgussgetränken nach dem vorhergehenden Anspruch, wobei der vorbestimmte Winkel (α) in einem Bereich zwischen etwa 45° und 90° liegt.

11. Maschine (1) zum Spenden von Aufgussgetränken nach dem vorhergehenden Anspruch, wobei der vorbestimmte Winkel (α) etwa 45° beträgt.

12. Maschine (1) zum Spenden von Aufgussgetränken nach einem der vorhergehenden Ansprüche, wobei die Gesamtanordnung so getroffen ist, dass dem Gehäuse (3) erlaubt ist, passiv, durch Wirkung der Schwerkraft, aus der ersten, "eingestellten" Konfiguration in die zweite, "nicht eingestellte" Konfiguration zu wechseln.

13. Maschine (1) zum Spenden von Aufgussgetränken nach einem der vorhergehenden Ansprüche, wobei sich die erste Bewegungseinrichtung bewegt und eine Kontrasteinrichtung (41) mit der Aufgusskopfeinheit (2) verbunden ist, und zwar so, dass durch Entgegenwirkung die Aufgusskopfeinheit (2) in einer ersten Position, in der sie an das Gehäuse (3) angrenzt, blockiert wird.

14. Maschine (1) zum Spenden von Aufgussgetränken nach einem der vorhergehenden Ansprüche, wobei die erste Bewegungseinrichtung (41) ein Bewegungssystem der Kniehebelbauart ist, die auf einem Paar angelenkter Hebel basiert.

15. Maschine (1) zum Spenden von Aufgussgetränken nach dem vorhergehenden Anspruch, wobei das Bewegungssystem (41) der Kniehebelbauart eine Sicherheitsblockierung, durch Überschreiten ihres eigenen Hubendes in einer Umkehrwinkelkonfiguration vornimmt, wenn die Aufgusskopfeinheit (2) in der ersten Position ist, in der sie an das Gehäuse (3) angrenzt.

16. Maschine (1) zum Spenden von Aufgussgetränken nach einem der vorhergehenden Ansprüche, wobei die zweite Bewegungseinrichtung (42) mit dem Gehäuse (3) verbunden und an der Aufgusskopfeinheit (2) fixiert ist.

17. Maschine (1) zum Spenden von Aufgussgetränken nach einem der vorhergehenden Ansprüche, wobei die Verbindungsstange (421) einen Schlitz für einen Leiteingriff mit einem Element (31) zum Verbinden mit dem Gehäuse (3) hat.

18. Maschine (1) zum Spenden von Aufgussgetränken nach einem der vorhergehenden Ansprüche, die weiter eine Verriegelungs- und/oder Trageinrichtung (5) zum wahlweisen Tragen und Blockieren des Gehäuses (3) in der ersten, "eingestellten"-Konfiguration zum Laden der Kartusche (C) und zum Abgeben des Aufgussgetränks aufweist.

19. Maschine (1) zum Spenden von Aufgussgetränken nach dem vorhergehenden Anspruch, wobei die Einrichtung (5) zum Blockieren und/oder Tragen des Gehäuses (3) durch die Aufgusskopfeinheit (2) wahlweise betätigbar und/oder bewegbar ist.

20. Maschine (1) zum Spenden von Aufgussgetränken nach Anspruch 18 oder 19, wobei die Einrichtung (5) zum Blockieren und/oder Tragen des Gehäuses (3) aufweist:
- einen Hauptbolzen (51), der einen ersten Teil (510) und einen zweiten Teil (511) hat, die vorzugsweise integral miteinander ausgebildet sind; und
- einen zweiten Bolzen (52), der mit dem ersten Teil (510) des Hauptbolzens (51) drehbar verbunden und in der Lage ist, das Gehäuse (3) zu verriegeln.

21. Maschine (1) zum Spenden von Aufgussgetränken nach dem vorhergehenden Anspruch, wobei die Einrichtung (5) zum Blockieren und/oder Tragen des Gehäuses (3) eine elastische Kontrasteinrichtung (53) aufweist.

22. Maschine (1) zum Spenden von Aufgussgetränken nach einem der vorhergehenden Ansprüche, die eine Führungseinrichtung (73) aufweist zum Einführen der Kartusche an oder in den Kartuschenhalter (3).

23. Maschine (1) zum Spenden von Aufgussgetränken nach dem vorhergehenden Anspruch, wobei die Gesamtanordnung der Führungseinrichtung (73) von der Neigung der Maschine (1) gegen den Boden (S) abhängig und so ist, dass sie das Einführen der Kartusche (C) auf oder in den Kartuschenhalter (3) allein durch die Wirkung der Schwerkraft erlaubt.

24. Maschine (1) zum Spenden von Aufgussgetränken nach einem der vorhergehenden Ansprüche, die gegen den Boden (S) montierbar geneigt ist.

25. Maschine (1) zum Spenden von Aufgussgetränken nach einem der vorhergehenden Ansprüche, die um 45° gegen den Boden (S) montierbar geneigt ist.

26. Maschine (1) zum Spenden von Aufgussgetränken nach einem der vorhergehenden Ansprüche, die in Bezug auf den Boden (S) horizontal montierbar ist.

27. Maschine (1) zum Spenden von Aufgussgetränken nach einem der vorhergehenden Ansprüche, wobei die Aufgusskopfeinheit (2) in Bezug auf einen Rahmen (7) der Maschine selbst verschiebbar montiert ist.

## Revendications

1. Machine (1) de distribution d'infusions, comme du café, du thé ou produit similaire à partir d'une préparation sous forme de dose/cartouche (C) ou similaire, comprenant :
- une unité de tête d'infusion (2), adaptée pour chauffer et distribuer un fluide qui transite à travers la cartouche (C) pour distribuer l'infusion ;
- un boîtier (3) apte à recevoir la cartouche (C) de manière à prendre une première configuration dite "armée" de chargement de la cartouche (C) et d'extraction de l'infusion et une deuxième configuration dite de "retrait" consistant à éjecter la cartouche (C) ; et
- un moyen (4) pour le déplacement combiné de ladite unité de tête d'infusion (2) et dudit boîtier (3), apte à faire passer ce dernier de ladite configuration "armée" à ladite configuration de "retrait" et vice versa, en fonction du mouvement de ladite unité de tête d'infusion (2),
ledit moyen de déplacement (4) comprenant lui-même :
- un premier moyen de déplacement (41) de ladite unité de tête d'infusion (2) ; et
- un deuxième moyen de déplacement (42) du boîtier (3),
**caractérisée en ce que** ledit deuxième moyen de déplacement (42) comprend au moins une biellette (421) connectée, à une première de ses extrémités, à ladite unité de tête d'infusion (2) et, à une deuxième de ses extrémités, audit boîtier (3).

2. Machine (1) de distribution d'infusions selon la revendication 1, dans laquelle ladite unité de tête d'infusion (2) et ledit boîtier (3) sont mutuellement mobiles afin de prendre une première position contiguë, dans laquelle ils sont en contact, et une deuxième position, espacée, dans laquelle ils sont à distance l'un de l'autre.

3. Machine (1) de distribution d'infusions selon la revendication 1 ou 2, dans laquelle ladite unité de tête d'infusion (2) est mobile le long d'un axe longitudinal (V) afin de réaliser une première position contiguë audit boîtier (3) et une deuxième position espacée dudit boîtier (3).

4. Machine (1) de distribution d'infusions selon l'une quelconque des revendications précédentes, dans laquelle ladite unité de tête d'infusion (2) et ledit boîtier (3) sont agencés de façon alignée longitudinalement.

5. Machine (1) de distribution d'infusions selon l'une quelconque des revendications précédentes, dans laquelle ledit boîtier (3) est connecté à rotation à un cadre (7) de la machine afin de prendre lesdites configurations "armée" et de "retrait".

6. Machine (1) de distribution d'infusions selon la précédente revendication, comprenant un élément de contraste (33), associé à ladite connexion rotative (32) du boîtier (3) au cadre (7) et apte à favoriser le mouvement dudit boîtier (3) dans le passage de ladite première configuration, dite "armée", à ladite deuxième configuration, dite de "retrait".

7. Machine (1) de distribution d'infusions selon l'une quelconque des revendications précédentes, dans laquelle ledit boîtier (3), dans ladite deuxième configuration, dite de "retrait", est tournée d'un angle prédéterminé (α) par rapport à ladite première configuration, dite "armée", dans laquelle on charge la cartouche (C) et l'on extrait l'infusion.

8. Machine (1) de distribution d'infusions selon la précédente revendication, dans laquelle ledit angle prédéterminé (α) dépend de l'inclinaison de la machine (1) par rapport au sol (S) et/ou d'une butée de fin de course associée.

9. Machine (1) de distribution d'infusions selon la revendication 7 ou 8, dans laquelle ledit angle prédéterminé (α) est compris entre environ 40° et 180°.

10. Machine (1) de distribution d'infusions selon la précédente revendication, dans laquelle ledit angle prédéterminé (α) est compris entre environ 45° et 90°.

11. Machine (1) de distribution d'infusions selon la précédente revendication, dans laquelle ledit angle prédéterminé (α) vaut environ 45°.

12. Machine (1) de distribution d'infusions selon l'une quelconque des revendications précédentes, dans laquelle l'agencement général est destiné à permettre audit boîtier (3) de passer de façon passive, par l'effet de la gravité, de ladite première configuration, dite "armée", à ladite deuxième configuration, dite de "retrait".

13. Machine (1) de distribution d'infusions selon l'une quelconque des revendications précédentes, dans laquelle ledit premier moyen de déplacement est un moyen de déplacement et de contraste (41) connecté à ladite unité de tête d'infusion (2) et de façon à bloquer par opposition ladite unité de tête d'infusion (2) dans une première position contiguë audit boîtier (3).

14. Machine (1) de distribution d'infusions selon l'une quelconque des revendications précédentes, dans laquelle ledit premier moyen de déplacement (41) est un système de déplacement du type à genouillères basé sur une paire de leviers articulés.

15. Machine (1) de distribution d'infusions selon la précédente revendication, dans laquelle ledit système de déplacement du type à genouillères (41) réalise un blocage de sécurité, en dépassant sa propre fin de course dans une configuration à angle inverse quand ladite unité de tête d'infusion (2) est dans ladite première position contiguë audit boîtier (3).

16. Machine (1) de distribution d'infusions selon l'une quelconque des revendications précédentes, dans laquelle ledit deuxième moyen de déplacement (42) est connecté audit boîtier (3) et fixé à ladite unité de tête d'infusion (2).

17. Machine (1) de distribution d'infusions selon l'une quelconque des revendications précédentes, dans laquelle ladite biellette (421) comporte une fente destinée à se mettre en prise de façon glissante avec un élément respectif (31) destiné à se connecter audit boîtier (3).

18. Machine (1) de distribution d'infusions selon l'une quelconque des revendications précédentes, comprenant en outre un moyen de blocage et/ou de support (5) pour supporter et bloquer sélectivement ledit boîtier (3) dans ladite première configuration, dite "armée", de chargement de la cartouche (C) et d'extraction de l'infusion.

19. Machine (1) de distribution d'infusions selon la précédente revendication, dans laquelle ledit moyen (5) pour bloquer et/ou supporter le boîtier (3) peut être actionné et/ou déplacé sélectivement par ladite unité de tête d'infusion (2).

20. Machine (1) de distribution d'infusions selon la revendication 18 ou 19, dans laquelle ledit moyen (5) pour bloquer et/ou supporter le boîtier (3) comprend :
- un boulon principal (51), comportant une première partie (510) et une deuxième partie (511), de préférence solidaires l'une de l'autre ; et
- un boulon secondaire (52), connecté à rotation à la première partie (510) du boulon principal (51) et apte à bloquer ledit boîtier (3).

21. Machine (1) de distribution d'infusions selon la précédente revendication, dans laquelle ledit moyen (5) pour bloquer et/ou supporter le boîtier (3) comprend un moyen de contraste élastique (53).

22. Machine (1) de distribution d'infusions selon l'une quelconque des revendications précédentes, comprenant un moyen de guidage (73) pour insérer la cartouche à ou dans le support de cartouche (3).

23. Machine (1) de distribution d'infusions selon la précédente revendication, dans laquelle l'agencement général dudit moyen de guidage (73) dépend de l'inclinaison de la machine (1) par rapport au sol (S) et est prévu pour permettre l'insertion de la cartouche (C) à ou dans le support de cartouche (3) par l'effet de la seule gravité.

24. Machine (1) de distribution d'infusions selon l'une quelconque des revendications précédentes, pouvant être montée inclinée par rapport au sol (S).

25. Machine (1) de distribution d'infusions selon l'une quelconque des revendications précédentes, pouvant être montée inclinée d'environ 45° par rapport au sol (S).

26. Machine (1) de distribution d'infusions selon l'une quelconque des revendications précédentes, pouvant être montée horizontalement par rapport au sol (S).

27. Machine (1) de distribution d'infusions selon l'une quelconque des revendications précédentes, dans laquelle ladite unité de tête d'infusion (2) est montée de façon à pouvoir glisser par rapport à un cadre (7) de la machine elle-même.
